Europäisches Patentamt

European Patent Office

Office européen des brevets

(11) Publication number: **0 284 377 B1**

# EUROPEAN PATENT SPECIFICATION

(45) Date of publication of patent specification: **27.10.93**  (51) Int. Cl.⁵: **G11B 7/09**, G11B 7/08

(21) Application number: **88302578.5**

(22) Date of filing: **24.03.88**

(54) **Optical disc recording and/or reproducing apparatus and focus control systems for such apparatus.**

(30) Priority: **25.03.87 JP 69053/87**
         **20.08.87 JP 206970/87**
         **29.01.88 JP 16838/88**

(43) Date of publication of application:
     **28.09.88 Bulletin 88/39**

(45) Publication of the grant of the patent:
     **27.10.93 Bulletin 93/43**

(84) Designated Contracting States:
     **AT DE FR GB**

(56) References cited:

     **PATENT ABSTRACTS OF JAPAN vol. 7, no.
     127 (P-201)(1272) 03 June 1983, & JP-A-58
     45666**

     **PATENT ABSTRACTS OF JAPAN vol. 8, no.
     18 (P-250)(1455) 26 January 1984, & JP-A-58
     177574**

(73) Proprietor: **SONY CORPORATION**
     **7-35 Kitashinagawa 6-chome**
     **Shinagawa-ku**
     **Tokyo 141(JP)**

(72) Inventor: **Wachi, Shigeaki c/o Sony Corporation**
     **7-35 Kitashinagawa**
     **Shinagawa-ku Tokyo 141(JP)**
     Inventor: **Kumagai, Eiji c/o Sony Corporation**
     **7-35 Kitashinagawa**
     **Shinagawa-ku Tokyo 141(JP)**

(74) Representative: **Pilch, Adam John Michael et al**
     **D. YOUNG & CO.,**
     **21 New Fetter Lane**
     **London EC4A 1DA (GB)**

## Description

This invention relates to optical disc recording and/or reproducing apparatus and to focus control systems for such apparatus.

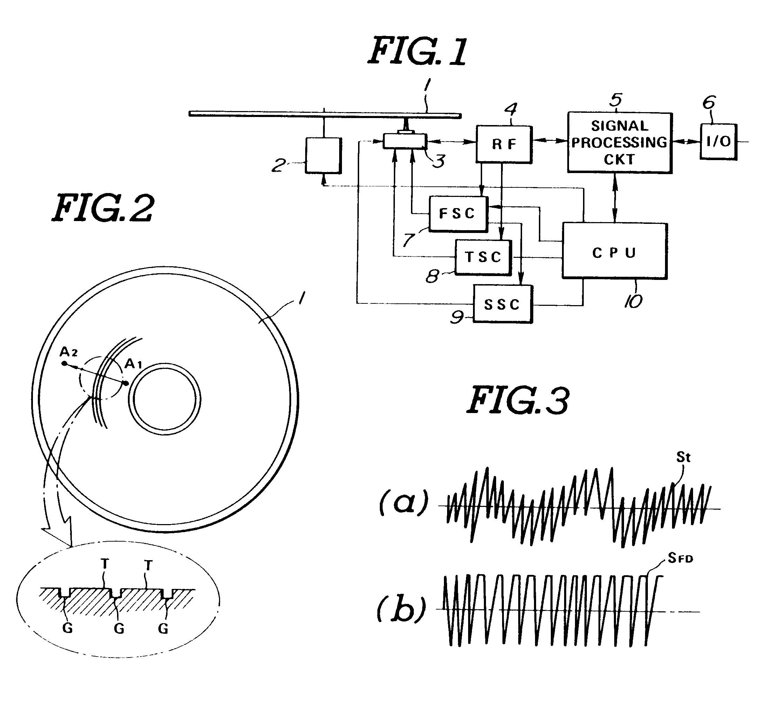

Figures 1 and 2 of the accompanying drawings illustrate respectively a circuit diagram of a previously-proposed optical disc recording and/or reproducing apparatus, and an optical disc to be used with the apparatus of Figure 1.

The optical disc recording and/or reproducing apparatus shown in Figure 1 is designed for recording and/or reproducing information on tracks formed on an optical disc 1. As is known, the optical disc 1 is chucked on a disc drive mechanism including a motor driven spindle 2 which is driven by a spindle motor so as to rotatingly drive the disc 1. As shown in Figure 2, the optical disc to be used in the illustrated apparatus is the so-called "pre-grooved type disc" which has a plurality of recording tracks defined by preliminarily formed grooves G. In addition, as a recordable optical disc, the shown embodiment may employ an optomagnetic disc. The disc 1 chucked on the spindle 2 is then driven at a given constant speed.

An optical head 3 is provided in the vicinity of the optical disc 1 for optically reading or writing information on the recording tracks of the optical disc 1. The optical head 3 is connected to a radio frequency (RF) circuit 4. The RF circuit 4, when operating in a reproducing mode, converts the information read from the recording track by means of the optical head 3 into an electrical signal indicative of the read information. On the other hand, the RF circuit 4, when operating in a recording mode, converts an information-containing electrical signal into an optical information signal in a form recordable on the recording track.

The RF circuit 4 is connected to a signal processing circuit 5 which performs specific signal processing operations. The signal processing circuit 5 is connected to an input/output (I/O) circuit 6.

The RF circuit 4 also supplies a focus error signal to a focus servo circuit 7. The RF circuit 4 is further connected to a tracking servo circuit 8 to feed a tracking error signal thereto. An output of the focus servo circuit 7 is connected to the optical head 3. Another output of the focus servo circuit 7 is connected to a thread servo circuit 9 which controls the transverse shift of the optical head 3.

The signal processing circuit 5, the focus servo circuit 7, the tracking servo circuit 8 and the thread servo circuit 9 are connected to a central processor unit (CPU) 10 which serves as a system controller. The CPU 10 outputs clock signals, timing signals, access signals and the like. The CPU 10 also outputs control signals for the aforementioned respective circuits for controlling operations thereof depending upon the selected operational mode. The CPU 10 also serves to control the driving speed of the spindle motor for controlling the rotational speed of the optical disc 1.

As shown in Figure 2, the grooves G are formed on the optical disc 1 in concentric circular or helical fashion. The grooves G will be hereafter referred to as "pre-grooves". Each pre-groove G has a width corresponding to $\lambda/8$ (where $\lambda$ is the wavelength of the laser in the optical head). Adjacent pairs of pre-grooves G each define a land T in between which serves as a recording track. As will be appreciated, the light intensity to be reflected from the pre-grooves G and the lands T will be different. Based on the difference in light intensity reflected from the pre-grooves G and the lands T, a tracking error signal is generated so that a tracking servo system will control the optical head to place the light spot of the laser beam on a desired one of the tracks for tracing therealong.

In such optical disc recording and reproducing apparatus, the reflected light intensity frequently varies every time the laser beam spot moves across the pre-grooves during a search operation, in which the optical head is shifted transversely across the tracks. As a result, a high frequency signal St modulated by the pre-grooves, which is shown in Figure 3(a) of the accompanying drawings and which will be hereafter referred to as the "traverse signal", tends to be superimposed on the focus error signal.

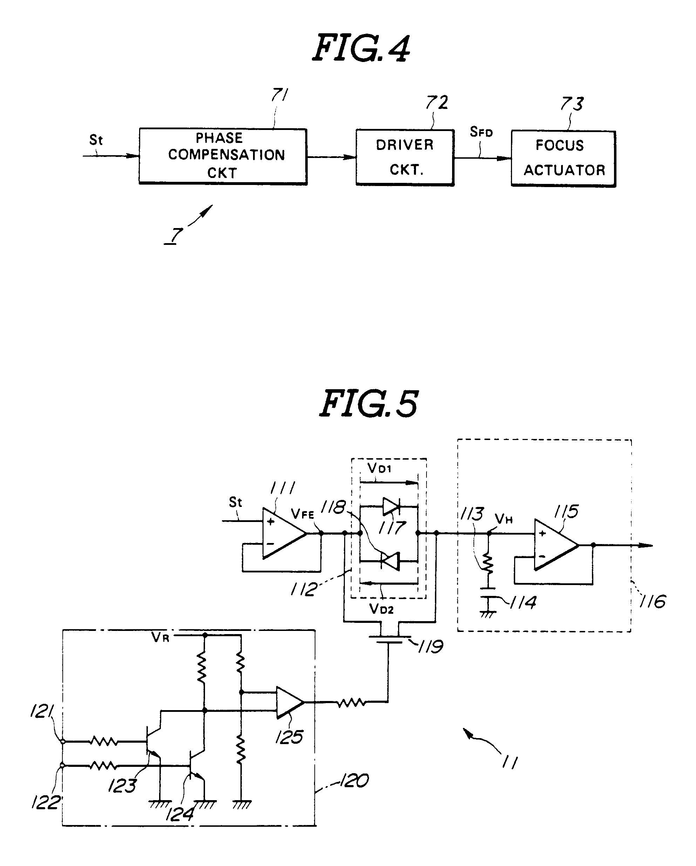

The focus servo circuit 7, shown in more detail in Figure 4 of the accompanying drawings, typically employs a phase compensation circuit 71 for enhancing high frequency components of the focus error signal St, so as to improve the response characteristics. The output of the phase compensation circuit 71 is fed to a driver circuit 72. The driver circuit 72 generates a drive signal $S_{FD}$ for driving a focus actuator 73.

In such a circuit arrangement, when the traverse signal is superimposed on the focus error signal St, the traverse signal may be enhanced in the focus servo loop described above. As a result, the peal: of the enhanced focus error signal tends to saturate, which causes distortion of the waveform in the drive signal SFD, as shown in Figure 3(b) of the accompanying drawings. This distortion of the waveform of the drive signal SFD causes variation in the direct current level. Such variation in the direct current level tends to degrade the accuracy of the focusing operation of the focus servo system.

According to an aspect of the present invention there is provided an optical disc recording and/or reproducing apparatus comprising:

an optical head for scanning a light beam on an optical disc formed with a plurality of generally circumferential grooves for reproducing an information signal including a focus error signal;

a focus servo system including a focus actuator operable to drive an object lens of said optical head for focusing a light beam on said optical disc; and

means associated with said focus actuator for deriving a focus control signal on the basis of said focus error signal in order to control said focus actuator;

characterised by:

means, active in an access mode operation of said apparatus in which the light beam shifts transversely across at least one of said grooves, for removing a signal component modulated by said groove and superimposed on said focus error signal, said signal component removing means comprising a deadband circuit and a sample/hold circuit, said deadband circuit defining a deadband for said focus error signal for absorbing fluctuations of said focus error signal within said deadband, whereby a value held in said sample/hold circuit is unchanged.

According to another aspect of the present invention there is provided an optical disc recording and/or reproducing apparatus comprising:

an optical head for scanning a light beam on an optical disc formed with a plurality of generally circumferential grooves for reproducing an information signal including a focus error signal;

a focus servo system including a focus actuator operable to drive an object lens of said optical head for focusing a light beam on said optical disc; and

means associated with said focus actuator for deriving a focus control signal on the basis of said focus error signal in order to control said focus actuator;

characterised by:

means, active in an access mode operation of said apparatus in which the light beam shifts transversely across at least one of said grooves, for removing a signal component modulated by said groove and superimposed on said focus error signal, said signal component removing means comprising a peak hold circuit for holding the peak value of said focus error signal, a bottom hold circuit for holding the bottom value of said focus error signal and an adder for adding outputs of said peak hold and bottom hold circuits.

A preferred embodiment of the present invention, to be described in greater detail hereinafter, provides an optical disc recording and reproducing apparatus which can effectively and stably eliminate the influence of the traverse signal for accurate focus control.

The preferred optical disc recording and reproducing apparatus is provided with a signal processing circuit in a focus servo circuit for suppressing the traverse signal component in the focus error signal, which component has a frequency determined by the pitch of the pre-grooves of the disc and by the transversely shifting speed of the laser beam spot, and which otherwise modulates the focus error signal during a search mode operation.

The signal processing circuit successfully overcomes the influence of the traverse signal on the focus servo system and thus assures accurate focus control.

According to a further aspect of the present invention there is provided a focus control system for an optical disc recording and/or reproducing apparatus which includes an optical head scanning a light beam on an optical disc formed with a plurality of generally circumferential grooves for reproducing an information signal including a focus error signal and a focus servo system including a focus actuator operable to drive an object lens of said optical head for focusing a light beam on said optical disc, said focus control system comprising:

a focus control signal generator, associated with said focus actuator, for deriving a focus control signal on the basis of said focus error signal in order to control said focus actuator;

characterised by:

a traverse signal component absorbing means provided upstream of said focus control signal generator, for absorbing fluctuations of said focus error signal within a predetermined fluctuation range in order to remove a traverse signal superimposed on said focus error signal, said signal component absorbing means comprising a deadband circuit and a sample/hold circuit, said deadband circuit defining a deadband for said focus error signal for absorbing fluctuations of said focus error signal within said deadband, whereby a value held in said sample/hold circuit is unchanged.

The preferred focus control system may include means for adjusting the deadband. The deadband adjusting means may detect the level of the signal component for adjusting the width of the deadband depending thereon. The deadband adjusting means may detect the signal component superimposed on an output of the sample/hold circuit for adjusting the deadband.

In addition, the focus control system may also include means for defining a signal path by-passing the deadband circuit for directly feeding the input focus error signal to the sample/hold circuit, the signal path including a switch operable between a conductive state for establishing the path and a non-conductive state for breaking the path, and switching to the conductive state in response to a signal indicative of one of a tracking operation state and a focus search state.

According to a still further aspect of the present invention there is provided a focus control system for an optical disc recording and/or reproducing apparatus which includes an optical head scanning a light beam on an optical disc formed with a plurality of generally circumferential grooves for reproducing an information signal including a focus error signal and a focus servo system including a focus actuator operable to drive an object lens of said optical head for focusing a light beam on said optical disc, said focus control system comprising:

a focus control signal generator, associated with said focus actuator, for deriving a focus control signal on the basis of said focus error signal in order to control said focus actuator;

characterised by:

a focus error signal smoothing means, disposed upstream of said focus control signal generator, for smoothing said focus error signal so as to remove a traverse signal superimposed on said focus error signal, said focus error signal smoothing means comprising a peak hold circuit for holding the peak value of said focus error signal, a bottom hold circuit for holding the bottom value of said focus error signal and an adder for adding outputs of said peak hold and bottom hold circuits.

The peak hold and bottom hold circuits may each include diodes, and the apparatus may further include means for compensating for non-linear characteristics of the diodes.

The focus control system may also include means for defining a signal path by-passing the focus error signal smoothing means for directly feeding the input focus error signal to the sample/hold circuit, the signal path including a switch operable between a conductive state for establishing the path and a non-conductive state for breaking the path, and switching to the conductive state in response to a signal indicative of one of a tracking operation state and a focus search state.

The invention will now be described by way of example with reference to the accompanying drawings, throughout which like parts are referred to by like references, and in which:

Figure 1 is a schematic block diagram of a previously-proposed optical disc recording and reproducing apparatus;

Figure 2 is a plan view (with a partially enlarged cross-sectional view) of a pre-groove type optical disc which can be used in the recording and reproducing apparatus of Figure 1 as well as in the preferred embodiment of the invention;

Figures 3(a) and 3(b) show respective waveforms of a focus error signal and a drive signal in a focus servo system;

Figure 4 is a block diagram of a focus servo circuit used in the previously-proposed apparatus of Figure 1;

Figure 5 is a circuit diagram of a traverse signal eliminating circuit and a control circuit which forms a major part of an optical disc recording and reproducing apparatus according to a first embodiment of the invention;

Figure 6 is a graph showing the input/output characteristics of a deadband circuit associated with the traverse signal eliminating circuit of Figure 5;

Figures 7(a) and 7(b) show waveforms of focus error signals;

Figure 8 is a circuit diagram of another traverse signal eliminating circuit to be used in optical disc recording and reproducing apparatus according to another embodiment of the invention;

Figures 9(a) to 9(e) are waveforms of signals appearing at various points in the traverse signal eliminating circuit of Figure 8;

Figures 10 and 11 are graphs showing the input/output characteristics of a deadband circuit associated with the traverse signal eliminating circuit of Figure 8;

Figure 12 is a chart showing waveforms of a focus error signal and an output of a sample/hold circuit used in the traverse signal eliminating circuit of Figure 8;

Figure 13 is a circuit diagram of a further traverse signal eliminating circuit which can be used in optical disc recording and reproducing apparatus embodying the invention;

Figures 14(a) and 14(b) are waveforms appearing in the circuit of Figure 13; and

Figure 15 is a modification of the traverse signal eliminating circuit of Figure 13.

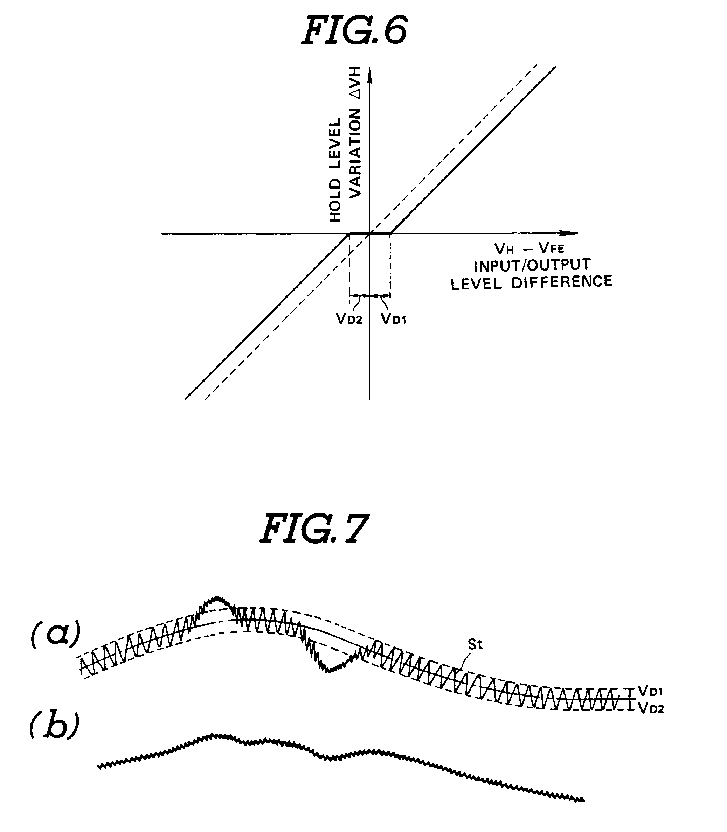

Referring now to the drawings and in particular to Figure 5, a traverse signal eliminating circuit 11 is interposed between an RF circuit (such as the RF circuit 4 shown in Figure 1) and a phase compensation circuit (such as the phase compensation circuit 71 shown in Figure 4). The traverse signal eliminating circuit 11 includes an operational amplifier 111 which forms a voltage follower circuit. The operational amplifier 111 has a non-inverting input terminal connected to the RF circuit (not shown) to receive therefrom a focus error signal St. The operational amplifier 111 also has an inverting input terminal connected to the output of the operational amplifier so as to constitute the voltage follower circuit.

The output of the operational amplifier 111 is also connected to a deadband circuit 112. The deadband circuit 112 is connected to the phase compensation circuit (not shown) via a sample/hold circuit 116 which comprises a resistor 113, a capacitor 114 and an operational amplifier 115 forming a voltage follower circuit.

The deadband circuit 112 comprises a pair of diodes 117 and 118. The diodes 117 and 118 are arranged in parallel relationship to each other and with opposite polarity. The deadband circuit 112 is designed to cancel the traverse signal superimposed on the focus error signal St with the potential difference of the forward or rising voltage of the diodes.

The held voltage $V_H$ of the sample/hold circuit 116 is normally applied to the non-inverting input terminal of the operational amplifier 115. When the input voltage $V_{FE}$ of the deadband circuit 112, which contains the superimposed traverse signal, fluctuates within a fluctuation range ($V_H - V_{FE}$) smaller than the rising voltage $V_{D1}$ or $V_{D2}$ or the diodes 117 and 118, both of the diodes are held OFF. Therefore, the held voltage $V_H$ of the sample/hold circuit 116 is transferred to the phase compensation circuit.

On the other hand, when the voltage fluctuation range ($V_H - V_{FE}$) is greater than the rising voltage of the diodes 117 and 118, both diodes turn ON. As a result of this, the held voltage $V_H$ is varied by a magnitude corresponding to a difference between the rising voltage $V_{D1}$ or $V_{D2}$ of the diodes 117 or 118 and the fluctuating voltage ($V_H - V_{FE}$).

As will be appreciated, with the arrangement described above, when the input voltage $V_{FE}$ fluctuates in relation to the held voltage $V_H$, the held voltage will not vary as long as the voltage fluctuation is in a range defined by the rising voltages $V_{D1}$ and $V_{D2}$ of the diodes 117 and 118. This voltage fluctuation range will hereafter be referred to as a "deadband". The traverse signal superimposed on the focus error signal St is successfully removed by utilising this deadband.

The input/output characteristics of the deadband circuit 112 are shown in Figure 6. As will be seen from Figure 6, the opposite connection of the diodes 117 and 118 will provide a substantial absorption magnitude for low level signals, that is for signals in a range between $V_{D1}$ and $V_{D2}$.

Turning back to Figure 5, the deadband circuit 112 is associated with a control circuit 120 which controls the deadband circuit 112 between active and inactive states. In order to control the deadband circuit operational state, a switch 119 is provided. The control circuit 120 has input terminals 121 and 122 which are connected to a system controller (not shown). When a HIGH level input is applied to one of the input terminals 121 and 122, the switch 119 is turned on, via one of two transistors 123 and 124, and via a differential amplifier 125, to make the deadband circuit 112 inactive.

The input level at the input terminal 121 represents the operational state of the tracking servo system and is held HIGH while the recording and reproducing apparatus operates in the reproduction mode, and thus the tracking servo system is operational. This turns the transistor 123 on and thus also the switch 119 on to establish a by-pass circuit for by-passing the focus error signal St through the switch 119. Similarly, the input level of the input terminal 122 represents the focus search operational state. When the focus search is operational, a HIGH level input is applied to the input terminal 122. As a result of this, the transistor 124 is turned on to turn the switch 119 on. This establishes the by-pass circuit for by-passing the focus error signal St through the switch 119.

On the other hand, when the optical head is driven transversely to the tracks on the optical disc in the search mode operation, the tracking servo system turns off thereby applying a LOW level to the input terminal 121. As a result, the transistor 123 is turned off to turn the switch 119 off. Therefore, the by-pass circuit through the switch 119 is interrupted and the focus error signal St is applied to the deadband circuit 112. At this time, since the input/output characteristics of the deadband circuit 112 are as illustrated in Figure 6, the focus error signal St (shown in Figure 7(a)) as the input of the deadband circuit has the superimposed traverse signal component absorbed to produce a signal having a waveform as shown in Figure 7(b). Since the output of the deadband circuit 112 shown in Figure 7(b) has the transverse signal component successfully removed therefrom, the driver circuit 72 of Figure 4 will not be saturated by the output of the phase compensation circuit 71.

On the other hand, when the recording and reproducing apparatus is turned on, or when the focus servo otherwise needs to be set, a focus search signal is applied to the driver circuit 72 for driving the object lens vertically for focus control. During the focus search, a HIGH level signal is applied to the input terminal 122 from the system controller. In response to the HIGH level signal at the input terminal 122, the transistor 124 turns on. This raises the output level of the differential amplifier 125 to turn the switch 119 on. This establishes the aforementioned by-pass circuit through the switch 119 to allow the focus error signal St to pass to the phase compensation circuit. Therefore, the focus search can be performed accurately and precisely.

In the aforementioned first embodiment of the optical disc recording and reproducing apparatus, the deadband circuit is designed to be active only when the optical head is driven transversely to the tracks of the optical disc to shift the laser beam spot transversely across the pre-grooves, for absorbing or removing the transverse signal which can be superimposed on the focus error signal. In other words, since the deadband circuit is held inactive while the tracking servo is on, this avoids the possibility of causing the focus servo system to be put in an off-focus condition due to the influence of the deadband circuit.

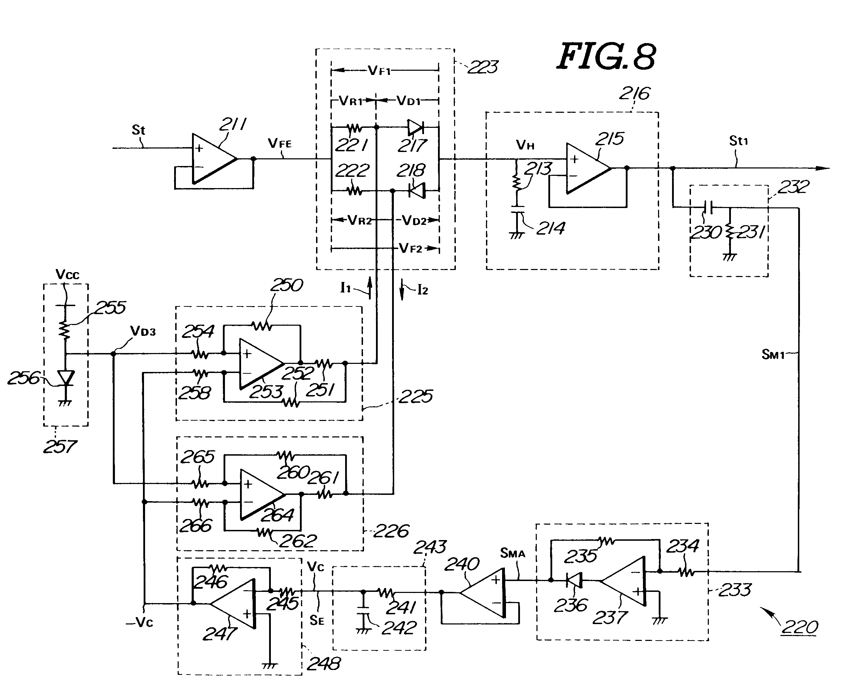

Figure 8 shows another traverse signal eliminating circuit according to a second embodiment of the invention. The traverse signal eliminating circuit 220 includes a deadband circuit 223 comprising a pair of diodes 217 and 218 and resistors 221 and 222 which are connected in series to associated ones of the diodes 217 and 218. As in the former embodiment, the diodes 217 and 218 are arranged in parallel and with opposite polarity. The resistors 221 and 222 have respective resistances of $R_1$ and $R_2$. A current source 225 is connected to a junction between the diode 217 and the resistor 221. Similarly, a second current source 226 is connected to a junction between the diode 218 and the resistor 222. The current sources 225 and 226 are arranged to supply currents of $I_1$ and $I_2$ respectively. The currents $I_1$ and $I_2$ of the current sources 225 and 226 serve to cause voltage drops $V_{R1}$ and $V_{R2}$ at the resistors 221 and 222 so as to apply offset voltages ($V_{FE}$ - $V_{R1}$, $V_{FE}$ + $V_{R2}$) relative to the input voltage $V_{FE}$ to the deadband circuit 223.

Therefore, the diodes 217 and 218 turn on when the following conditions are established:

$$V_{D1} < (V_{FE} - V_{R1}) - V_H \qquad (1)$$

$$V_{D2} < V_H - (V_{FE} + V_{R2}) \qquad (2)$$

The foregoing conditions (1) and (2) can be modified to:

$$V_{D1} + V_{R1} < V_{FE} - V_H \qquad (3)$$

$$-(V_{D2} + V_{R2}) > V_{FE} - V_H \qquad (4)$$

As will be seen from the foregoing conditions, the diodes 217 and 218 turn on when the fluctuation magnitude of the input voltage $V_{FE}$ is out of the range defined by ($V_{D1}$ + $V_{R1}$) and -($V_{D2}$ + $V_{R2}$). When the diodes 217 and 218 turn on, the held voltage $V_H$ of a sample/hold circuit 216 varies. In other words, as long as the fluctuation magnitude of the input voltage $V_{FE}$ is maintained within range defined by ($V_{D1}$ + $V_{R1}$) and -($V_{D2}$ + $V_{R2}$), the held voltage $V_H$ can be held constant.

Here, as will be seen, since the deadband is variable in a range defined by ($V_{D1}$ + $V_{R1}$) and -($V_{D2}$ + $V_{R2}$) depending upon the voltage drop $V_{R1}$ and $V_{R2}$, the deadband can be adjusted by adjusting the currents $I_1$ and $I_2$ supplied by the current sources 225 and 226.

In the Figure 8 embodiment, the current sources 225 and 226 are designed to vary the output current $I_1$ and $I_2$ depending upon the level of the traverse signal. This adjusts the deadband range depending upon the traverse signal level for assured removal of the traverse signal superimposed on the focus error signal, and prevents the focus error signal level from being lowered excessively.

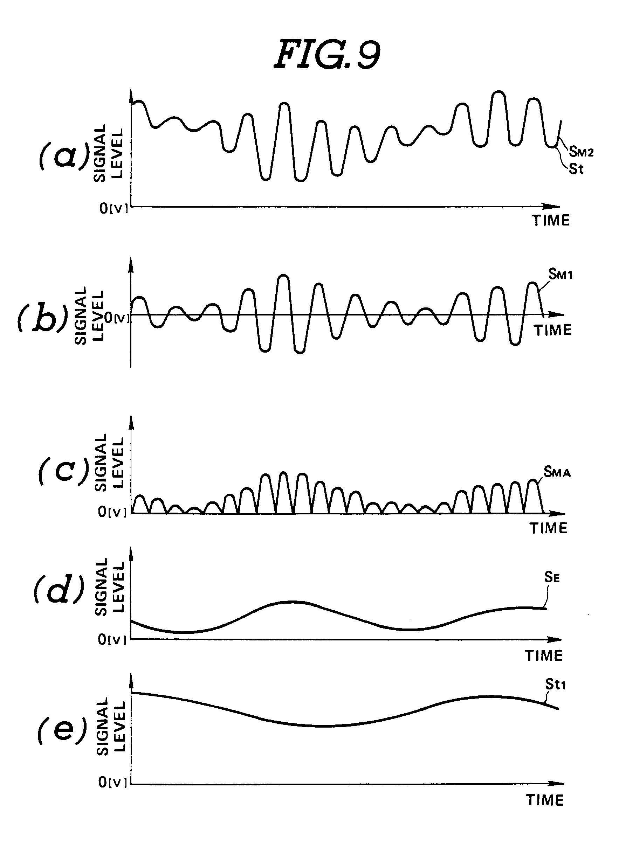

For this purpose, a high-pass filter circuit 232 which comprises a capacitor 230 and a resistor 231 is connected to the output of the sample/hold circuit 216 in order to receive the focus error signal $St_1$ output therefrom. The high-pass filter 232 extracts the traverse signal $S_{M1}$ from the focus error signal $St_1$. The traverse signal $S_{M1}$ extracted by the high-pass filter 232 is fed to a full-wave rectification amplifier 233. As a result, when the traverse signal $S_{M2}$ is superimposed on the focus error signal, as shown in Figure 9(a) representing the input to the traverse signal eliminating circuit 220, and when the traverse signal $S_{M2}$ causes the input signal fluctuation to go beyond the deadband defined by the deadband circuit 223, the excess magnitude of the traverse signal $S_{M1}$ is extracted by the high-pass filter circuit 232 and supplied to the full-wave rectification amplifier 233.

The full-wave rectification amplifier 233 comprises an input resistor 234, a feedback resistor 235 and an operational amplifier 237 including a rectification diode 236. The resistances of the input resistor 234 and the feedback resistor 235 are set at an equal value. With this circuit arrangement, the full-wave rectification amplifier 233 supplies a full-wave rectified output signal $S_{MA}$, as shown in Figure 9(c). The rectified output signal $S_{MA}$ of the full-wave rectification amplifier 233 is fed via an operational amplifier 240 to an envelope detector circuit 243 which comprises a resistor 241 and a capacitor 242. As will be seen from Figure 8, the envelope detector circuit 243 is in the form of a low-pass filter. As a result of the envelope detector circuit 243, an envelope signal $S_E$ (shown in Figure 9(d)) can be obtained from the rectified output signal $S_{MA}$ itself derived from the traverse signal $S_{M1}$ extracted by the high-pass filter circuit 232.

The high-pass filter circuit 232, the full-wave rectification amplifier 233, the operational amplifier 240, and the envelope detector circuit 243 together form a traverse signal detector circuit.

The output of the envelope detector circuit 243 is connected to an inverting amplifier 248. The inverting amplifier 248 comprises an operational amplifier 247 having an input resistor 245 and a feedback resistor 246. The input resistor 245 and the feedback resistor 246 have the same resistance value. With this arrangement, the inverting amplifier 248 receives the envelope signal $S_E$ supplied by the envelope detector circuit 243 and inverts the received envelope signal to provide an output to the current sources 225 and 226. Assuming that the voltage level of the envelope signal $S_E$ supplied to the inverting amplifier 248 is Vc, the voltage level of the inverted envelope signal becomes -Vc.

The current source 225 includes an operational amplifier 253 having an inverting input terminal, a non-inverting input terminal and an output terminal. A feedback resistor 250 is disposed between the non-inverting input terminal and the output terminal. Another feedback resistor 252 is disposed between the inverting input terminal and one side of an output resistor 251 whose other side is connected to the output terminal of the operational amplifier 253. The non-inverting input terminal of the operational amplifier 253 is also connected, via an input resistor 254, to a reference voltage source 257 comprising a resistor 255 and a temperature compensation diode 256, to receive therefrom a reference voltage $V_{D3}$. The inverting input terminal of the operational amplifier 253 is connected, via an input resistor 258, to the output of the inverting amplifier 248 to receive the inverted envelope signal. The output terminal of the operational amplifier 253 is connected to the resistor 221 of the deadband circuit 223 via the output resistor 251 to supply the current $I_1$. The resistance of the output resistor 251 is set at a value equal to the resistance $R_1$ of the resistor 221. On the other hand, the resistances of the feedback resistors 250 and 252 and the input resistors 254 and 258 are selected to be equal to each other. With this circuit arrangement, the following equation can be established for the voltage across the output resistor 251 with respect to the input voltages Vc and $V_{D3}$ and the output current $I_1$:

$$I_1 R_1 = Vc - V_{D3} \qquad (5)$$

On the other hand, the voltage drop $V_{R1}$ across the resistor 221 in relation to the current $I_1$ can be expressed by:

$$V_{R1} = R_1 I_1 \qquad (6)$$

Therefore, the voltage drop $V_{R1}$ can be expressed by:

$$V_{R1} = Vc - V_{D3} \qquad (7)$$

From the foregoing, the voltage $V_{F1}$ defining the deadband and determined by the resistor 221 and the diode 217 can be expressed by:

$$V_{F1} = V_{D1} + V_{R1} = V_{D1} + Vc - V_{D3} \qquad (8)$$

Assuming that the diodes 217, 218 and 256 are provided with the same rising voltage, the following equation can be derived from the foregoing equation (8):

$$V_{F1} = Vc \qquad (9)$$

Therefore, the voltage $V_{F1}$ defining the deadband, which voltage is determined by the diode 217 and the resistor 221, can be controlled in proportion to the output voltage Vc.

In similar manner, the current source 226 has an operational amplifier 264 having a non-inverting input terminal, an inverting input terminal and an output terminal. A feedback resistor 260 is connected to the output terminal via an output resistor 261 at one end and to the non-inverting input terminal at the other end. Another feedback resistor 262 is disposed between the output terminal and the inverting input terminal. The non-inverting input terminal of the operational amplifier 264 is also connected to the reference voltage source 257 via an input resistor 265. The inverting input terminal is connected to the output of the inverting amplifier 248 to receive therefrom the inverted envelope signal -Vc, via an input resistor 266. The output resistor 261 has a resistance $R_2$ which is the same as that of the resistor 222. The resistances of the feedback resistors 260 and 262 and the input resistors 265 and 266 are set to be equal to each other.

With this circuit arrangement, the current source 226 generates a current $I_2$ of polarity opposite to that of the current $I_1$. When the resistances $R_1$ and $R_2$ are equal, the currents $I_1$ and $I_2$ have equal amplitudes. The current $I_2$ is applied to the resistor 222.

As will be appreciated, since similar equations to those discussed above with respect to the current source 225 apply, the following relationship can be established:

$$V_{F2} = Vc = -V_{F1} \qquad (10)$$

As will be appreciated herefrom, since it is controlled by the opposite polarity and the same amplitude of current $I_2$, the voltage $V_{F2}$ has an identical voltage value and opposite polarity to the voltage $V_{F1}$, to define the deadband.

The current sources 225 and 226, the inverting amplifier 248 and the reference voltage source 257 constitute a deadband control circuit for controlling the width of the deadband according to the level of the envelope signal $S_E$. Furthermore, in the illustrated embodiment, the diodes 217 and 218 in the deadband circuit 223 have the same characteristics as those of the temperature compensation diode 256 in the reference voltage source 257, and since a closed loop is formed in the traverse signal eliminating circuit 220 for controlling the width of the deadband, the temperature characteristics of the diodes 217 and 218 can be stably and effectively compensated for practical use.

As will be appreciated herefrom, the illustrated embodiment extracts the traverse signal within the focus error signal St output from the sample/hold circuit 216, and controls the width of the deadband by adjusting the voltages $V_{F1}$ and $V_{F2}$. Therefore, the traverse signal can be effectively removed or absorbed from the focus error signal St to obtain a waveform as shown in Figure 9(e).

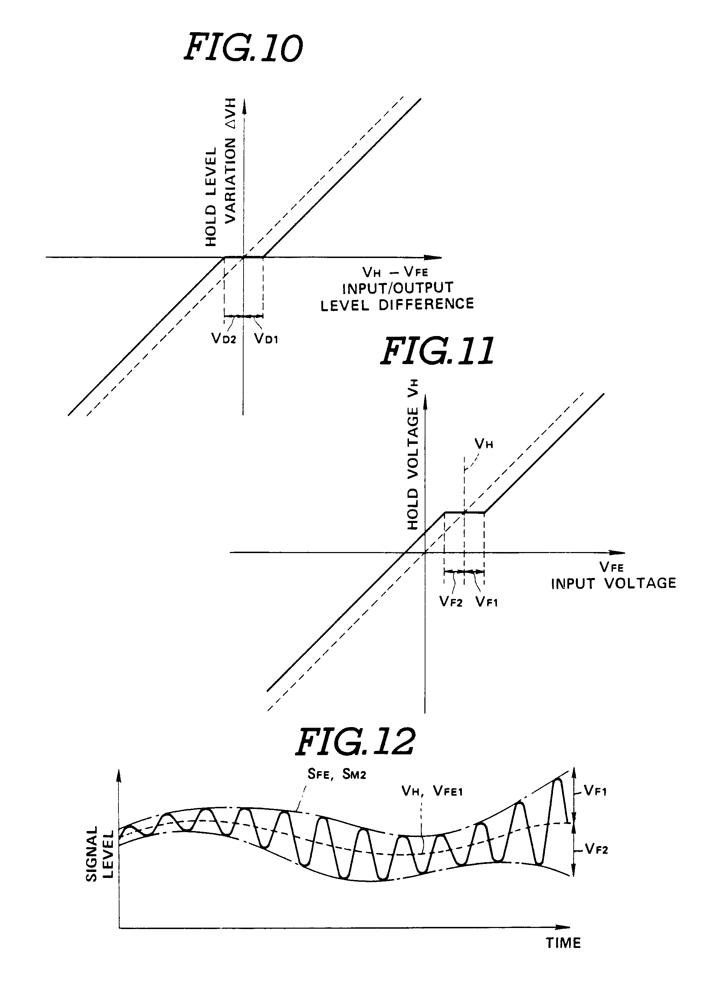

As shown in Figures 10 and 11, the deadband circuit 223 has input/output characteristics of variable deadband width by variation of the voltages $V_{F1}$ and $V_{F2}$, taking the input/output voltage difference $(V_H - V_{Fe})$ of OV as the centre according to the traverse signal, and since a closed loop is formed within the complete traverse signal eliminating circuit 220 for controlling the width of the deadband, the temperature characteristics of the diodes 217 and 218 can be level compensated. As a result, the input/output characteristics of the deadband circuit 223, in which the voltages $V_{F1}$ and $V_{F2}$ defining the deadband vary, determine the conditions under which the held voltage $V_H$ of the sample/hold circuit 216 is utilised.

Since the voltages $V_{F1}$ and $V_{F2}$ have opposite polarities and the same magnitude of voltage difference relative to the held voltage $V_H$, and the width of the deadband is variable depending upon the traverse signal level superimposed on the focus error signal so that any range of variation of the traverse signal can be removed from the focus error signal, the influence of the traverse signal on the focus servo system can be successfully overcome. This can be seen from the waveform of Figure 12.

In a practical construction, the focus control circuit is arranged for its gain to be as high as possible but so that oscillation of the focus servo circuit can be avoided. The deadband circuit serves for preventing the focus servo circuit from oscillating by adjusting the width of the deadband. This makes adjustment of the gain of the focus control circuit easier.

It should be noted that although the illustrated embodiment may, as described above, utilise resistors 221 and 222 having the same resistances as the resistors 251 and 261 of the current sources 225 and 226, it may be possible to set these resistances at mutually different values or to supply different amplitudes of current to the resistors 221 and 222, thereby causing offset of the deadband with respect to the held voltage $V_H$.

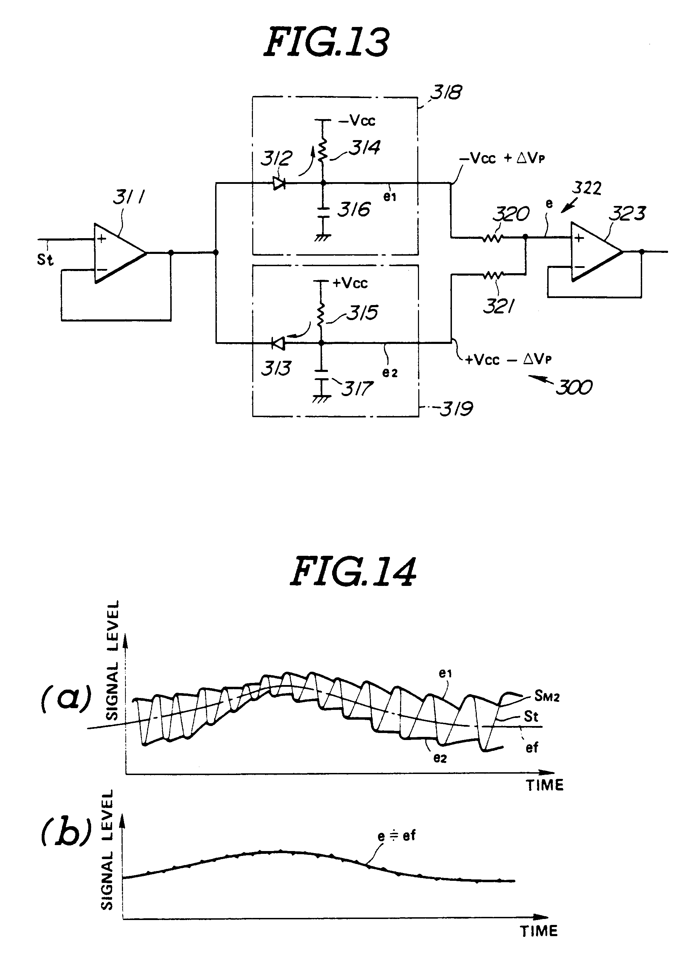

Figure 13 shows a further embodiment of the traverse signal eliminating circuit for optical disc recording and reproducing apparatus. The traverse signal eliminating circuit 300 includes an amplifier 311 which is of voltage follower type construction and which receives the focus error signal St. The traverse signal eliminating circuit 300 also includes a peak hold circuit 318 and a bottom hold circuit 319. The peak hold circuit 318 comprises a diode 312, a resistor 314 and a capacitor 316. The bottom hold circuit 319 comprises a diode 313, a resistor 315 and a capacitor 317. The outputs of the peak hold and bottom hold circuits 318 and 319 are connected to an adder circuit 322 including resistors 320 and 321, and an operational amplifier 323. The diodes 312 and 313, arranged in opposite polarity sense, are connected to respective constant voltage sources supplying respective voltages -Vcc and +Vcc via the resistors 314 and 315. The voltages -Vcc and +Vcc supplied via the resistors 314 and 315 provide suitable forward current flow through the diodes 312 and 313. The resistances of the resistors 320 and 321 are set at the same value.

The focus error signal St is applied to the diodes 312 and 313 of the peak hold and bottom hold circuits 318 and 319 via the voltage follower type amplifier 311. The peak value of the focus error signal St is rectified by the diode 312 and this charges the capacitor 316. The bottom value of the focus error signal St is rectified by the diode 313 and this charges the capacitor 317.

Assuming that the time constants of the resistor 314 and the capacitor 316, and of the resistor 315 and the capacitor 317, are both T, and that this time constant T is sufficiently longer than the period of the traverse signal $SM_2$, the terminal voltages of the capacitors 316 and 317 respectively vary as the peak hold voltage $e_1$ and the bottom hold voltage $e_2$, as shown in Figure 14(a). Since the peak hold voltage $e_1$ and the bottom hold voltage $e_2$ are applied through the resistors 320 and 321 which have the same resistance, the voltage e at the intersection point becomes $(e_1/2 + e_2/2)$ which is substantially equal to the pure focus error signal $e_f$, as shown in Figure 14(b).

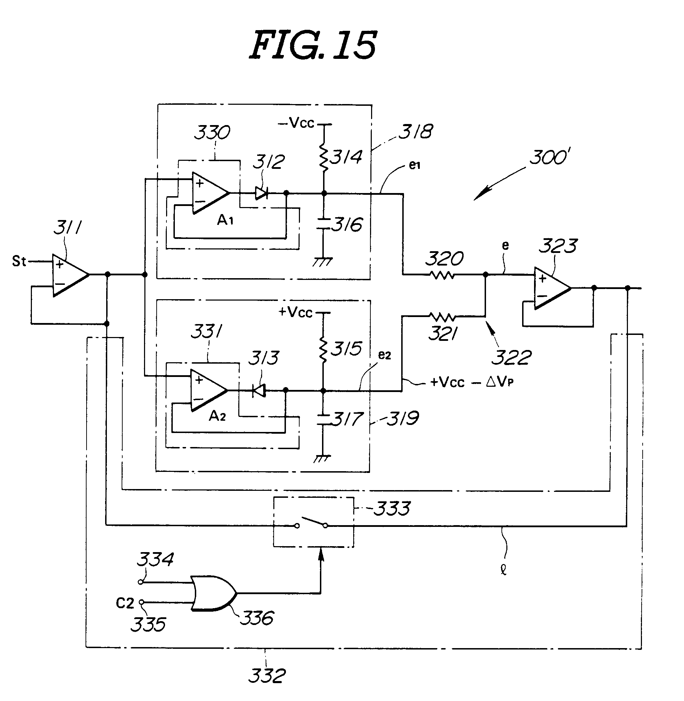

Figure 15 shows a modification of the traverse signal eliminating circuit of Figure 13. In this modification, the traverse signal eliminating circuit $300'$ includes operational amplifiers 330 and 331 in the peak hold and bottom hold circuits 318 and 319. These operational amplifiers 330 and 331 are provided for improving the non-linear characteristics of the diodes 312 and 313. For this purpose, the operational amplifiers 330 and 331 are disposed between the amplifier 311 and the diodes 312 and 313 of the peak hold and bottom hold circuits 318 and 319.

Furthermore, the modified circuit of Figure 15 includes a by-pass circuit 332 for by-passing the traverse signal eliminating circuit $300'$ to feed the focus error signal St directly to the phase compensation circuit (not shown). A switch 333 is disposed in the by-pass circuit 332 for establishing and blocking the by-pass circuit. The switch 333 is controlled by a gate signal of an OR gate 336. The OR gate 336 is connected to one input terminal 334, to which a tracking ON state indicative signal is applied. The OR gate 336 is also connected to another input terminal 335 to which a focus search state indicative signal is applied. The OR gate 336 is responsive to one of the tracking ON state indicative signal and the focus search state indicative signal to set the switch 333 to its closed position for establishing the by-pass circuit 332.

As will be appreciated, the by-pass circuit 332 with the switch 333 and the OR gate 336 to control the switch position, serves as a control circuit equivalent to the control circuit 120 illustrated in Figure 5.

Therefore, in the embodiments of Figures 13 and 15, the influence of the traverse signal can be successfully overcome by holding the peak and bottom values and obtaining average values thereof.

## Claims

1. An optical disc recording and/or reproducing apparatus comprising:

an optical head (3) for scanning a light beam on an optical disc (1) formed with a plurality of generally circumferential grooves (G) for reproducing an information signal including a focus error signal (St);

a focus servo system (7) including a focus actuator (73) operable to drive an object lens of said optical head (3) for focusing a light beam on said optical disc (1); and

means (71) associated with said focus actuator (73) for deriving a focus control signal (SFD) on the basis of said focus error signal (St) in order to control said focus actuator (73);

characterised by:

means (11;220;300), active in an access mode operation of said apparatus in which the light beam shifts transversely across at least one of said grooves (G), for removing a signal component (SM1) modulated by said groove (G) and superimposed on said focus error signal (St), said signal component removing means comprising a deadband circuit (112;223) and a sample/hold circuit (116;216), said deadband circuit defining a deadband for said focus error signal (St) for absorbing fluctuations of said focus error signal within said deadband, whereby a value held in said sample/hold circuit is unchanged.

2. Apparatus according to claim 1, comprising switching means (119;333), associated with said signal component removing means (11;220;300), for switching the operational state of said signal component removing means, said switching means being responsive to a non-tracking operation state indicative signal for activating said signal component removing means.

3. Apparatus according to claim 2, wherein said switching means (119;333) is operable to render said signal component removing means (11;220;300) inactive during a focus search operation.

4. Apparatus according to claim 1, claim 2 or claim 3, comprising means (233 to 266) for adjusting said deadband.

5. Apparatus according to claim 4, wherein said deadband adjusting means (233 to 266) is operable to detect the level of said signal component (SM1) for adjusting the width of said deadband in dependence thereon.

6. Apparatus according to claim 5, wherein said deadband adjusting means (233 to 266) is operable to detect said signal component (SM1) superimposed on an output of said sample/hold circuit (216) for adjusting said deadband.

7. Apparatus according to any one of the preceding claims, comprising means for defining a signal path by-passing said deadband circuit (112;223) for directly feeding the input focus error signal (St) to said sample/hold circuit (116), said signal path including a switch (119) operable between a conductive state for establishing said path and a non-conductive state for breaking said path.

8. An optical disc recording and/or reproducing apparatus comprising:

an optical head (3) for scanning a light beam on an optical disc (1) formed with a plurality of generally circumferential grooves (G) for reproducing an information signal including a focus error signal (St);

a focus servo system (7) including a focus actuator (73) operable to drive an object lens of said optical head (3) for focusing a light beam on said optical disc (1); and

means (71) associated with said focus actuator (73) for deriving a focus control signal (SFD) on the basis of said focus error signal (St) in order to control said focus actuator (73);

characterised by:

means (11;220;300), active in an access mode operation of said apparatus in which the light beam shifts transversely across at least one of said grooves (G), for removing a signal component (SM1) modulated by said groove (G) and superimposed on said focus error signal (St), said signal component removing means comprising a peak hold circuit (318) for holding the peak value of said focus error signal (St), a bottom hold circuit (319) for holding the bottom value of said focus error signal (St) and an adder (322) for adding outputs of said peak hold and bottom hold circuits (318,319).

9. Apparatus according to claim 8, wherein said peak hold and bottom hold circuits (318,319) each include diodes (312,313), and comprising means (330,331) for compensating for non-linear characteristics of said diodes (312,313).

10. Apparatus according to claim 8 or claim 9, comprising means for defining a signal path by-passing said peak hold and bottom hold circuits (318,319) for directly feeding the input focus error signal (St) to an output, said signal path including a switch (333) operable between a conductive state for establishing said path and a non-conductive state for breaking said path.

11. Apparatus according to claim 7 or claim 10, wherein said switch (119;333) is operable to switch to said conductive state during a tracking operation state of the apparatus.

12. Apparatus according to claim 7, claim 10 or claim 11, wherein said switch (119;333) is operable to switch to said conductive state during a focus search state of the apparatus.

13. A focus control system for an optical disc recording and/or reproducing apparatus which includes an optical head (3) scanning a light beam on an optical disc (1) formed with a plurality of generally circumferential grooves (G) for reproducing an information signal including a focus error signal (St) and a focus servo system (7) including a focus actuator (73) operable to drive an object lens of said optical head (3) for focusing a light beam on said optical disc (1), said focus control system comprising:

a focus control signal generator (71), associated with said focus actuator (73), for deriving a focus control signal (SFD) on the basis of said focus error signal (St) in order to control said focus actuator (73);

characterised by:

a traverse signal component absorbing means (11;220) provided upstream of said focus control signal generator (71), for absorbing fluctuations of said focus error signal (St) within a predetermined fluctuation range in order to remove a traverse signal (SM1) superimposed on said focus error signal (St), said signal component absorbing means comprising a deadband circuit (112;223) and a sample/hold circuit (116;216), said deadband circuit defining a deadband for said focus error signal (St) for absorbing fluctuations of said focus error signal within said deadband, whereby a value held in said sample/hold circuit is unchanged.

14. A focus control system according to claim 13, comprising means (233 to 266) for adjusting said deadband.

15. A focus control system according to claim 14, wherein said deadband adjusting means (233 to 266) is operable to detect the level of said traverse signal (SM1) for adjusting the width of said deadband depending thereon.

16. A focus control system according to claim 15, wherein said deadband adjusting means (233 to 266) is operable to detect said traverse signal (SM1) superimposed on an output of said sample/hold circuit (116;216) for adjusting said deadband.

17. A focus control system according to any one of claims 13 to 16, comprising means for defining a signal path by-passing said deadband circuit (112) for directly feeding the input focus error signal (St) to said sample/hold circuit (116), said signal path including a switch (119) operable between a conductive state for establishing said path and a non-conductive state for breaking said path, and switching to said conductive state in response to a signal indicative of one of a tracking operation state and a focus search state.

18. A focus control system for an optical disc recording and/or reproducing apparatus which includes an optical head (3) scanning a light beam on an optical disc (1) formed with a plurality of generally circumferential grooves (G) for reproducing an information signal including a focus error signal (St) and a focus servo system (7) including a focus actuator (73) operable to drive an object lens of said optical head (3) for focusing a light beam on said optical disc (1), said focus control system comprising:

a focus control signal generator (71), associated with said focus actuator (73), for deriving a focus control signal (SFD) on the basis of said focus error signal (St) in order to control said focus actuator (73);

characterised by:

a focus error signal smoothing means (300), disposed upstream of said focus control signal generator (71), for smoothing said focus error signal (St) so as to remove a traverse signal (SM1) superimposed on said focus error signal (St), said focus error signal smoothing means (300) comprising a peak hold circuit (318) for holding the peak value of said focus error signal (St), a bottom hold circuit (319) for holding the bottom value of said focus error signal (St) and an adder (322) for adding outputs of said peak hold and bottom hold circuits (318,319).

19. A focus control system according to claim 18, wherein said peak hold and bottom hold circuits (318,319) each include diodes (312,313), and comprising means (330,331) for compensating for non-linear characteristics of said diodes (312,313).

20. A focus control system according to claim 18 or claim 19, comprising means for defining a signal path by-passing said focus error signal smoothing means (300) for directly feeding the input focus error signal (St) to an output, said signal path including a switch (333) operable between a conductive state for establishing said path and a non-conductive state for breaking said path, and switching to said conductive state in response to a signal indicative of one of a tracking operation state and a focus search state.

**Patentansprüche**

1. Gerät zur Aufzeichnung und/oder Wiedergabe mit optischer Disk, mit;

einem optischen Kopf (3) für ein Abtasten eines Lichtstrahls über eine optische Disk (1), die eine Vielzahl im allgemeinen umfangsmäßige (kreisförmig herumlaufende) Rillen (G) hat, zur Wiedergabe eines Informationssignals, eingeschlossen ein Fokusfehlersignal (St);

einem Fokus-Servosystem (7), das einen Fokusaktuator (73) hat, der zum Bewegen einer Objektivlinse des optischen Kopfes (3) zu betreiben ist, um einen Lichtstrahl auf der optischen Disk (1) zu fokussieren; und

Mitteln (71), die dem Fokusaktuator (73) zugeordnet sind, um ein Fokussteuersignal (SFD) auf der Basis des Fokusfehlersignals (St) abzuleiten und den Fokusaktuator (73) zu steuern;

**gekennzeichnet durch,**

Mittel (11;220;300), die im Zugriffsbetrieb des Gerätes, in dem der Lichtstrahl quer über wenigstens eine der Rillen (G) verschoben wird, aktiv sind, um eine durch diese Rille (G) modulierte und dem Fokusfehlersignal (St) überlagerte Signalkomponente (SM1) zu beseitigen, wobei diese Mittel zur Beseitigung der Signalkomponente eine Totbandschaltung (112;223) und eine Abtast- und Halteschaltung (116;216) haben, wobei die Totbandschaltung ein Totband für das Fokusfehlersignal (St) zum Absorbieren von Schwankungen dieses Fokusfehlersignals innerhalb des Totbandes definiert, womit ein in dieser Abtast- und Halteschaltung gehaltener Wert unverändert ist.

2. Gerät nach Anspruch 1 mit einer Schaltereinrichtung (119,330), die den Mitteln (11,220,300) zur Beseitigung besagter Signalkomponente zugeordnet ist, zum Schalten des Betriebszustandes dieser Mittel zur Beseitigung der Signalkomponente, wobei die Schaltereinrichtung auf ein Anzeigesignal, betreffend einen nichtspurführenden Betriebszustand, anspricht, um besagte Mittel zur Beseitigung der Signalkomponente zu aktivieren.

3. Vorrichtung nach Anspruch 2, bei der diese Schaltereinrichtung (119,330) so zu betreiben ist, daß sie diese Mittel (11;220;300) zur Beseitigung der Signalkomponente während des Fokus-Suchbetriebes inaktiv macht.

4. Gerät nach Anspruch 1, Anspruch 2 oder Anspruch 3, mit Mitteln (233-266) zur Einstellung des Totbandes.

5. Gerät nach Anspruch 4, wobei diese Mittel (233-266) zur Einstellung des Totbandes so zu betreiben sind, daß sie den Pegel der Signalkomponente (SM1) zur Einstellung der Breite dieses Totbandes in Abhängigkeit von diesem detektieren.

6. Gerät nach Anspruch 5, wobei diese Mittel (233-266) zur Einstellung des Totbandes zu betreiben sind, um diese Signalkomponente (SM1), die einem Ausgangssignal der Abtast- und Halteschaltung (216) überlagert ist, zur Einstellung dieses Totbandes zu detektieren.

7. Gerät nach irgendeinem der vorangehenden Ansprüche mit Mitteln zur Bildung eines Signal-Bypaßweges dieser Totbandschaltung (112;223), um das Eingangs-Fokusfehlersignal (St) der Abtast- und Halteschaltung (116) direkt zuzuführen, wobei dieser Signalweg einen Schalter (119) einschließt, der zu schalten ist zwischen einem leitenden Zustand zur Bildung dieses Weges und einem nicht-leitenden Zustand zum Unterbrechen dieses Weges.

8. Gerät zur Aufzeichnung und/oder Wiedergabe mit einer optischen Disk, mit:

einem optischen Kopf (3) für ein Abtasten eines Lichtstrahls über eine optische Disk (1), die eine Vielzahl im allgemeinen umfangsmäßige Rillen (G) hat, zur Wiedergabe eines Informationssignals, eingeschlossen ein Fokusfehlersignal (St);

einem Fokus-Servosystem (7), das einen Fokusaktuator (73) hat, der zum Bewegen einer Objektivlinse des optischen Kopfes (3) zu betreiben ist, um einen Lichtstrahl auf der optischen Disk (1) zu fokussieren; und

Mitteln (71), die dem Fokusaktuator (73) zugeordnet sind, um ein Fokussteuersignal (SFD) auf der Basis des Fokusfehlersignals (St) abzuleiten und den Fokusaktuator (73) zu steuern;

**gekennzeichnet durch:**

Mittel (11;220;300), die im Zugriffsbetrieb des Gerätes, in dem der Lichtstrahl quer über wenigstens eine der Rillen (G) verschoben wird, aktiv sind, um eine durch diese Rille (G) modulierte und dem Fokusfehlersignal (St) überlagerte Signalkomponente (SM1) zu beseitigen, wobei diese Mittel zur Beseitigung der Signalkomponente eine Halteschaltung (318) für einen Spitzenwert zum Halten eines Spitzenwertes des Fokusfehlersignals (St) hat, eine Halteschaltung (319) für einen Grundwert zum Halten des Grundwertes dieses Fokusfehlersignals (St) hat und eine Addierschaltung (322) zum Addieren der Ausgangssignale der Halteschaltungen (318,319) für Spitzenwert und Grundwert besitzt.

9. Gerät nach Anspruch 8, bei dem eine jede der Halteschaltungen (318,319) für Spitzenwert und Grundwert Dioden (312,313) umfaßt und Mittel (330,331) zur Kompensation nicht-linearer Charakteristik dieser Dioden (312,313) hat.

10. Vorrichtung nach Anspruch 8 oder 9, mit Mitteln zur Bildung eines Signalweges als Bypaß für die Halteschaltungen (318,319) für Spitzenwert und Grundwert, um das Eingangs-Fokusfehlersignal (St) dem Ausgang direkt zuzuführen, wobei dieser Signalweg einen Schalter (333) hat, der zu schalten ist zwischen einem leitenden Zustand zur Bildung dieses Weges und einem nicht-leitenden Zustand zum Unterbrechen dieses Weges.

11. Gerät nach Anspruch 7 oder 10, bei dem dieser Schalter (119,333) während eines Betriebszustandes der Spurführung des Gerätes leitend zu schalten ist.

12. Gerät nach Anspruch 7, 10 oder 11, bei dem dieser Schalter (119;333) während eines Betriebszustandes der Fokuseinstellung leitend zu schalten ist.

13. Fokus-Steuersystem für ein Gerät zur Aufzeichnung und/oder Wiedergabe mit einer optischen Disk, das einschließt: einen optischen Kopf (3) für ein Abtasten eines Lichtstrahls über eine optische Disk (1), die eine Vielzahl im allgemeinen umfangsmäßige Rillen (G) hat, zur Wiedergabe eines Informationssignals, eingeschlossen ein Fokusfehlersignal (St), und ein Fokus-Servosystem (7), das einen Fokusaktuator (73) hat, der zum Bewegen einer Objektivlinse des optischen Kopfes (3) zu betreiben ist, um einen Lichtstrahl auf der optischen Disk (1) zu fokussieren, wobei das Fokus-Steuersystem umfaßt:

einen Fokussteuersignal-Generator (71), der dem Fokusaktuator (73) zugeordnet ist, um ein Fokussteuersignal (SFD) auf der Basis des Fokusfehlersignals (St) abzuleiten und den Fokusaktuator (73) zu steuern;

**gekennzeichnet durch:**

Mittel (11;220) zum Absorbieren einer Überquerungssignalkomponente, wobei diese Mittel vor dem Generator (71) für das Fokussteuersignal angeordnet sind, um Schwankungen des Fokusfehlersignals (St) innerhalb einer vorgegebenen Schwankungsbreite zu absorbieren, um ein Überquerungssignal (SM1) zu beseitigen, das dem Fokusfehlersignal (St) überlagert ist, wobei diese Mittel zum Absorbieren dieser Signalkomponente eine Totbandschaltung (112,223) und eine Abtast- und Halteschaltung (116;216) umfaßen und die Totbandschaltung ein Totband für das Fokusfehlersignal (St) zum Absorbieren von innerhalb dieses Totbandes liegenden Schwankungen des Fokusfehlersignals festlegt, wobei ein in der Abtast- und Halteschaltung gehaltener Wert unverändert ist.

14. Fokus-Steuersystem nach Anspruch 13, mit Mitteln (233-266) zur Einstellung des Totbandes.

15. Fokus-Steuersystem nach Anspruch 14, wobei diese Mittel (233-266) zur Einstellung des Totbandes so zu betreiben sind, daß sie den Pegel der Signalkomponente (SM1) zur Einstellung der Breite dieses Totbandes in Abhängigkeit von diesem detektieren.

16. Fokus-Steuersystem nach Anspruch 15, wobei diese Mittel (233-266) zur Einstellung des Totbandes zu betreiben sind, um diese Signalkomponente (SM1), die einem Ausgangssignal der Abtast- und Halteschaltung (216) überlagert ist, zur Einstellung dieses Totbandes zu detektieren.

17. Fokus-Steuersystem nach einem der Ansprüche 13 bis 16, mit Mitteln zur Bildung eines Signal-Bypaßweges dieser Totbandschaltung (112;223), um das Eingangs-Fokusfehlersignal (St) der Abtast- und Halteschaltung (116) direkt zuzuführen, wobei dieser Signalweg einen Schalter (119) einschließt, der zu schalten ist zwischen einem leitenden Zustand zur Bildung dieses Weges und einem nicht-leitenden Zustand zum Unterbrechen dieses Weges und zum Schalten des leitenden Zustandes abhängig von einem Anzeigesignal eines der Zustände der Spurführung und der Fokuseinstellung.

18. Fokus-Steuersystem für ein Gerät zur Aufzeichnung und/oder Wiedergabe mit optischer Disk, wobei dieses Gerät einschließt: einen optischen Kopf (3) für einen Lichtstrahl zur Abtastung einer optischen Disk (1), die eine Vielzahl im allgemeinen umfangsmäßige Rillen (G) hat, zur Wiedergabe eines Informationssignals, eingeschlossen ein Fokusfehlersignal (St), und ein Fokus-Servosystem (7), das einen Fokusaktuator (73) hat, der zum Bewegen einer Objektivlinse des optischen Kopfes (3) zu betreiben ist, um einen Lichtstrahl auf der optischen Disk (1) zu fokussieren, wobei das Fokus-Steuersystem umfaßt:
    einen Fokussteuersignal-Generator (71), der dem Fokusaktuator (73) zugeordnet ist, um ein Fokussteuersignal (SFD) auf der Basis des Fokusfehlersignals (St) abzuleiten und den Fokusaktuator (73) zu steuern;
    **gekennzeichnet durch:**
    ein Glättungsmittel (300) für das Fokusfehlersignal, wobei dieses Mittel vor dem Generator (71) für das Fokussteuersignal angeordnet ist, um das Fokusfehlersignal (St) so zu glätten, um damit ein Überquerungssignal (SM1), das dem Fokusfehlersignal (St) überlagert ist, zu beseitigen, wobei dieses Mittel (300) zur Glättung des Fokusfehlersignals eine Halteschaltung (318) für einen Spitzenwert zum Halten des Spitzenwertes dieses Fokusfehlersignals (St) hat, eine Halteschaltung (319) für einen Grundwert zum Halten des Grundwertes dieses Fokusfehlersignals (St) hat und eine Addierschaltung (322) zum Addieren der Ausgangssignale dieser Halteschaltungen (318,319) für Spitzenwert und Grundwert aufweist.

19. Fokus-Steuersystem nach Anspruch 18, bei dem eine jede der Halteschaltungen (318,319) für Spitzenwert und Grundwert Dioden (312,313) umfaßt und Mittel (330,331) zur Kompensation nicht-linearer Charakteristik dieser Dioden (312,313) hat.

20. Fokus-Steuersystem nach Anspruch 18 oder 19, mit Mitteln zur Bildung eines Signalweges als Bypaß für die Glättungsmittel (300) für das Fokusfehlersignal, um das Eingangs-Fokusfehlersignal (St) direkt dem Ausgang zuzuführen, wobei dieser Signalweg einen Schalter (333) umfaßt, der zwischen einem leitenden Zustand zur Bildung dieses Weges und einem nicht-leitenden Zustand zur Unterbrechung dieses Weges zu betreiben ist und zum Einschalten dieses leitenden Zustandes abhängig von einem Anzeigesignal eines Betriebszustandes der Spurführung und der Fokuseinstellung.

## Revendications

1. Un appareil d'enregistrement et/ou de reproduction à disque optique comprenant :
    une tête optique (3) pour balayer avec un faisceau de lumière un disque optique (1) qui comporte un ensemble de sillons (G) de forme générale circulaire, pour reproduire un signal d'information contenant un signal d'erreur de focalisation (St);
    un système d'asservissement de focalisation (7) comprenant un actionneur de focalisation (73) que l'on peut actionner pour déplacer un objectif de la tête optique (3) de façon à focaliser un faisceau de lumière sur le disque optique (1); et
    des moyens (71) associés à l'actionneur de focalisation (73) pour élaborer un signal de commande de focalisation (SFD) sur la base du signal d'erreur de focalisation (St), afin de commander l'actionneur de focalisation (73);
    caractérisé par :
    des moyens (11; 220; 300) qui sont actifs au cours du fonctionnement de l'appareil dans un mode d'accès dans lequel le faisceau de lumière se déplace transversalement en traversant l'un au moins des sillons (G), de façon à éliminer une composante de signal (SM1) modulée par le sillon (G) et superposée sur le signal d'erreur de focalisation (St), ces moyens d'élimination de composante de signal comprenant un circuit de zone d'insensibilité (112; 223) et un circuit échantillonneur-bloqueur (116; 216), le circuit de zone d'insensibilité définissant une zone d'insensibilité pour le signal d'erreur de focalisation (St), afin d'absorber des fluctuations du signal d'erreur de focalisation dans cette zone d'insensibilité, grâce à quoi une valeur qui est bloquée dans le circuit échantillonneur/bloqueur est inchangée.

2. Appareil selon la revendication 1, comprenant des moyens de commutation (119; 333), associés aux moyens d'élimination de composante de signal (11; 220; 300), pour commuter l'état fonctionnel des moyens d'élimination de composante de signal, ces moyens de commutation réagissant à un signal indiquant un état de fonctionnement autre qu'un état de poursuite, en activant les moyens d'élimination de composante de signal.

3. Appareil selon la revendication 2, dans lequel les moyens de commutation (119; 333) peuvent fonctionner de façon à désactiver les moyens d'élimination de composante de signal (11; 220; 300) pendant une opération de recherche de focalisation.

4. Appareil selon la revendication 1, la revendication 2 ou la revendication 3, comprenant des moyens (233 à 266) pour régler la zone d'insensibilité.

5. Appareil selon la revendication 4, dans lequel les moyens de réglage de zone d'insensibilité (233 à 266) peuvent fonctionner de façon à détecter le niveau de la composante de signal précitée (SM1) de façon à régler la largeur de la zone d'insensibilité sous la dépendance de ce niveau.

6. Appareil selon la revendication 5, dans lequel les moyens de réglage de zone d'insensiblité (233 à 266) peuvent fonctionner de façon à détecter la composante de signal (SM1) qui est superposée sur un signal de sortie du circuit échantillonneur-bloqueur (216), pour régler la zone d'insensibilité.

7. Appareil selon l'une quelconque des revendications précédentes, comprenant des moyens pour définir un chemin de signal qui contourne le circuit de zone d'insensibilité (112; 223), pour appliquer directement le signal d'erreur de focalisation d'entrée (St) au circuit échantillonneur-bloqueur (116), ce chemin de signal comprenant un interrupteur (119) qui peut être commuté entre un état conducteur pour établir le chemin précité, et un état non conducteur pour interrompre ce chemin.

8. Un appareil d'enregistrement et/ou de reproduction à disque optique comprenant :

une tête optique (3) pour balayer avec un faisceau de lumière un disque optique (1) qui comporte un ensemble de sillons (G) de forme générale circulaire, pour reproduire un signal d'information contenant un signal d'erreur de focalisation (St);

un système d'asservissement de focalisation (7) comprenant un actionneur de focalisation (73) que l'on peut actionner pour déplacer un objectif de la tête optique (3) de façon à focaliser un faisceau de lumière sur le disque optique (1); et

des moyens (71) associés à l'actionneur de focalisation (73) pour élaborer un signal de commande de focalisation (SFD) sur la base du signal d'erreur de focalisation (St), afin de commander l'actionneur de focalisation (73);

caractérisé par :

des moyens (11; 220; 300) qui sont actifs au cours du fonctionnement de l'appareil dans un mode d'accès dans lequel le faisceau de lumière se déplace transversalement en traversant l'un au moins des sillons (G), de façon à éliminer une composante de signal (SM1) modulée par le sillon (G) et superposée sur le signal d'erreur de focalisation (St), ces moyens d'élimination de composante de signal comprenant un circuit de blocage de valeur de crête (318) qui est destiné à bloquer la valeur de crête du signal d'erreur de focalisation (St), un circuit de blocage de valeur de creux (319) qui est destiné à bloquer la valeur de creux du signal d'erreur de focalisation (St), et un additionneur (322) pour additionner les signaux de sortie des circuits de blocage de valeur de crête et de blocage de valeur de creux (318, 319).

9. Appareil selon la revendication 8, dans lequel les circuits de blocage de valeur de crête et de blocage de valeur de creux (318, 319) comprennent chacun des diodes (312, 313), et des moyens (330, 331) pour compenser des caractéristiques non linéaires des diodes (312, 313).

10. Appareil selon la revendication 8 ou la revendication 9, comprenant des moyens pour définir un chemin de signal qui contourne les circuits de blocage de valeur de crête et de blocage de valeur de creux (318, 319), pour appliquer directement le signal d'erreur de focalisation d'entrée (St) à une sortie, ce chemin de signal comprenant un interrupteur (333) qui peut être commuté entre un état conducteur pour établir le chemin précité et un état non conducteur pour interrompre ce chemin.

**11.** Appareil selon la revendication 7 ou la revendication 10, dans lequel l'interrupteur (119; 333) peut être actionné de façon à passer à l'état conducteur pendant un état de fonctionnement de poursuite de l'appareil.

**12.** Appareil selon la revendication 7, la revendication 10 ou la revendication 11, dans lequel l'interrupteur (119; 333) peut être actionné de façon à passer à l'état conducteur pendant un état de recherche de focalisation de l'appareil.

**13.** Un système de commande de focalisation pour un appareil d'enregistrement et/ou de reproduction à disque optique qui comprend une tête optique (3) balayant au moyen d'un faisceau de lumière un disque optique (1) qui comporte un ensemble de sillons (G) de forme générale circulaire, pour reproduire un signal d'information contenant un signal d'erreur de focalisation (St), et un système d'asservissement de focalisation (7) comprenant un actionneur de focalisation (73) qui peut être actionné de façon à déplacer un objectif de la tête optique (3) pour focaliser un faisceau de lumière sur le disque optique (1), ce système de commande de focalisation comprenant :

un générateur de signal de commande de focalisation (71), associé à l'actionneur de focalisation (73), pour élaborer un signal de commande de focalisation (SFD) sur la base du signal d'erreur de focalisation (St), afin de commander l'actionneur de focalisation (73);

caractérisé par :

des moyens d'absorption de composante de signal transversal (11; 220) qui sont placés en amont du générateur de signal de commande de focalisation (71), pour absorber des fluctuations du signal d'erreur de focalisation (St) dans une plage de fluctuation prédéterminée, dans le but d'éliminer un signal transversal (SM1) qui est superposé sur le signal d'erreur de focalisation (St), ces moyens d'absorption de composante de signal comprenant un circuit de zone d'insensibilité (112; 223) et un circuit échantillonneur-bloqueur (116; 216), le circuit de zone d'insensibilité définissant une zone d'insensibilité pour le signal d'erreur de focalisation (St), afin d'absorber des fluctuations du signal d'erreur de focalisation dans la zone d'insensibilité, grâce à quoi une valeur qui est bloquée dans le circuit échantillonneur-bloqueur est inchangée.

**14.** Un système de commande de focalisation selon la revendication 13, comprenant des moyens (233 à 266) pour régler la zone d'insensibilité.

**15.** Un système de commande de focalisation selon la revendication 14, dans lequel les moyens de réglage de la zone d'insensibilité (233 à 266) détectent le niveau du signal transversal (SM1) pour régler la largeur de la zone d'insensibilité sous la dépendance de ce niveau.

**16.** Un système de commande de focalisation selon la revendication 15, dans lequel les moyens de réglage de la zone d'insensibilité (233 à 266) peuvent détecter le signal transversal (SM1) qui est superposé sur un signal de sortie du circuit échantillonneur-bloqueur (116; 216) de façon à régler la zone d'insensibilité.

**17.** Un système de commande de focalisation selon l'une quelconque des revendications 13 à 16, comprenant des moyens pour définir un chemin de signal qui contourne le circuit de zone d'insensibilité (112), pour appliquer directement le signal d'erreur de focalisation d'entrée (St) au circuit échantillonneur-bloqueur (116), ce chemin de signal comprenant un interrupteur (119) qui peut être commuté entre un état conducteur pour établir le chemin précité et un état non conducteur pour interrompre ce chemin, et qui est commuté à l'état conducteur sous l'effet d'un signal qui indique soit un état de fonctionnement de poursuite, soit un état de recherche de focalisation.

**18.** Un système de commande de focalisation pour une appareil d'enregistrement et/ou de reproduction à disque optique qui comprend une tête optique (3) balayant au moyen d'un faisceau de lumière un disque optique (1) qui comporte un ensemble de sillons (G) de forme générale circulaire, pour reproduire un signal d'information contenant un signal d'erreur de focalisation (St), et un système d'asservissement de focalisation (7) comprenant un actionneur de focalisation (73) qui peut être actionné de façon à déplacer un objectif de la tête optique (3) pour focaliser un faisceau de lumière sur le disque optique (1), ce système de commande de focalisation comprenant :

un générateur de signal de commande de focalisation (71), associé à l'actionneur de focalisation (73), pour élaborer un signal de commande de focalisation (SFD) sur la base du signal d'erreur de focalisation (St), afin de commander l'actionneur de focalisation (73);

caractérisé par :

des moyens de lissage de signal d'erreur de focalisation (300), placés en amont du générateur de signal de commande de focalisation (71), pour lisser le signal d'erreur de focalisation (St) de façon à éliminer un signal transversal (SM1) superposé sur le signal d'erreur de focalisation (St), ces moyens de lissage de signal d'erreur de focalisation (300) comprenant un circuit de blocage de valeur de crête (318) qui est destiné à bloquer la valeur de crête du signal d'erreur de focalisation (St), un circuit de blocage de valeur de creux (319) qui est destiné à bloquer la valeur de creux du signal d'erreur de focalisation (St) et un additionneur (322) pour additionner des signaux de sortie des circuits de blocage de valeur de crête et de blocage de valeur de creux (318, 319).

19. Un système de commande de focalisation selon la revendication 18, dans lequel les circuits de blocage de valeur de crête et de blocage de valeur de creux (318, 319) comprennent chacun des diodes (312, 313), et des moyens (330, 331) pour compenser des caractéristiques non linéaires de ces diodes (312, 313).

20. Un système de commande de focalisation selon la revendication 18 ou la revendication 19, comprenant des moyens pour définir un chemin de signal qui contourne les moyens de lissage de signal d'erreur de focalisation (300), pour appliquer directement le signal d'erreur de focalisation d'entrée (St) à une sortie, ce chemin de signal comprenant un interrupteur (333) que l'on peut commuter entre un état conducteur pour établir le chemin précité et un état non conducteir pour interrompre ce chemin, et qui est commuté à l'état conducteur sous l'effet d'un signal indiquant soit un état de fonctionnement de poursuite, soit un état de recherche de focalisation.

## FIG.1

## FIG.2

## FIG.3

(a)

(b)

EP 0 284 377 B1

# FIG.4

St → | PHASE COMPENSATION CKT | 71 → | DRIVER CKT. | 72 — $S_{FD}$ → | FOCUS ACTUATOR | 73

7

# FIG.5

St

111 $V_{FE}$ /118 $V_{D1}$ 117 113 $V_H$ /115

112 $V_{D2}$ 116

119

114

$V_R$

121 123 125 120

122 124 11

## FIG.6

HOLD LEVEL VARIATION △VH

$V_H - V_{FE}$
INPUT/OUTPUT
LEVEL DIFFERENCE

$V_{D2}$    $V_{D1}$

## FIG.7

(a)

St

$V_{D1}$
$V_{D2}$

(b)

19

FIG.8

EP 0 284 377 B1

# FIG.9

## FIG.10

HOLD LEVEL VARIATION ΔVH

$V_H - V_{FE}$
INPUT/OUTPUT
LEVEL DIFFERENCE

$V_{D2}$  $V_{D1}$

## FIG.11

HOLD VOLTAGE $V_H$

$V_H$

$V_{FE}$
INPUT VOLTAGE

$V_{F2}$  $V_{F1}$

## FIG.12

$S_{FE}$, $S_{M2}$

$V_H$, $V_{FE1}$

$V_{F1}$

$V_{F2}$

SIGNAL LEVEL

TIME

EP 0 284 377 B1

## FIG.13

## FIG.14

(a)

(b)

23

## FIG. 15